# EUROPEAN PATENT APPLICATION

(11) **EP 4 283 542 A1**
(43) Date of publication of application: **29.11.2023**
(21) Application number: 21921317.0
(22) Date of filing: 21.12.2021
(51) Int. Cl.: G06Q 10/06

(54) **WORK MANAGEMENT DEVICE, WORK MANAGEMENT METHOD, AND WORK MANAGEMENT PROGRAM**

(30) Priority: 22.01.2021 JP 2021009139; 15.09.2021 JP 2021149910
(71) Applicant: OMRON Corporation, Kyoto 600-8530 (JP)
(72) Inventor: FUJIMOTO, Shinya, Kyoto-shi, Kyoto 600-8530 (JP); UJITA, Yasuhiro, Kyoto-shi, Kyoto 600-8530 (JP)
(74) Representative: Becker, Eberhard
(86) International application number: PCT/JP2021/047166
(87) International publication number: WO 2022/158216

(57) **Abstract**

At work sites, using imaging data and work flows to find points to improve in work processes requires considerable time. A work management device (10) comprises: a history acquisition unit (100) that acquires an implementation result information history for workers in a work process group; a classification processing unit (171) that classifies at least some of the implementation result information into any of a plurality of classes; and a class determination unit (172) that determines each classified class to be a standard class in which no issues occur during work or a non-standard class in which issues may occur during work.

## Description

### Technical Field

The present invention relates to a work management device that manages work processes, for example, at a production site.

### Background Art

Since the past, attempts to use imaging data obtained by capturing images of the implementation statuses of work processes at production sites such as factories to improve such work processes have been known.

For example, there is a captured moving image confirmation method of preparing a database in which imaging data of each work process and a work time in the work process are associated with each other and allowing a user to specify and confirm imaging data of work processes with abnormal work times. More specifically, the procedure is as follows. First, when a user designates a range of products and work times from the above database, the corresponding work processes are extracted. When the user further selects a specific work process among them, a histogram of work times of the work process is displayed. When the user selects a range of predetermined work times from this histogram, the corresponding imaging data is displayed. The user specifies the cause of the abnormality by confirming the displayed imaging data.

In addition, as a method of using imaging data, Patent Literature 1 discloses a method of specifying a standard work flow among work flows obtained from imaging data and setting dissociation of the work flow from the standard work flow as a point for improvement.

### Citation List

### Patent Literature

Patent Literature 1: Japanese Patent No. 6789590

### Summary of Invention

### Problem to Be Solved by Invention

However, in the case of the above captured moving image confirmation method, although narrowing down is performed by product, work time, and work process, it is still necessary to confirm a large number of moving images.

In addition, the above method disclosed in Patent Literature 1 has the following problems. At a production site, the product types are often changed, and different work processes are often used for each product type. Further, there are work processes which are not directly related to production such as setups associated with changes in product types, periodic maintenance, and replenishment of materials. That is, in a case where one standard work flow is specified as in the method disclosed in Patent Literature 1, even a work process having no issues is determined to be different from the standard work flow and is extracted as a work process having issues. Thus, an excessive amount of abnormal work is extracted, making the confirmation work performed by the user inefficient.

An aspect of the present invention was contrived in view of these problems, and an objective thereof is to provide a work management device that appropriately determines various work processes in which no issues occur.

### Means for Solving Problem

In order to solve the above problems, according to an aspect of the present invention, there is provided a work management device including: a history acquisition part that acquires work history information which is a history of implementation result information of implementation performed by a worker on a work process group including a plurality of work processes; a classification processing part that classifies at least some of the implementation result information in the work process group included in the work history information acquired by the history acquisition part respectively into any of a plurality of classes; and a class determination part that determines that a plurality of the classes among the classes classified by the classification processing part are standard classes in which no issues occur during work and determines that another plurality of the classes are non-standard classes in which issues are likely to occur during work.

In order to solve the above problems, according to an aspect of the present invention, there is provided a work management method including: a history acquisition step of acquiring work history information which is a history of implementation result information of implementation performed by a worker on a work process group including a plurality of work processes; a classification processing step of classifying at least some of the implementation result information of the work process group included in the work history information acquired in the history acquisition step respectively into any of a plurality of classes; and a class determination step of determining that a plurality of the classes among the classes classified in the classification processing step are standard classes in which no issues occur during work and determining that another plurality of the classes are non-standard classes in which issues are likely to occur during work.

### Effects of Invention

According to an aspect of the present invention, it is possible to classify the implementation result information in the work process group into a plurality of classes and then determine each class as a standard class or a non-standard class.

### Brief Description of Drawings

Fig. 1 is a block diagram illustrating main components of an information processing device and the like included in a control system.
Fig. 2 is a diagram illustrating an overall outline of the control system and the like including the information processing device (work management device).
Fig. 3 is a diagram illustrating an image of basic imaging data acquired from a ceiling camera by the information processing device.
Fig. 4 is an example of flow analysis in a work process of which a certain worker is in charge.
Fig. 5 is a diagram in which a flow is divided into units of work process flows through flow analysis.
Fig. 6 is a conceptual diagram in which a large number of work process flows are divided into large-classification classes and representatives of the large-classification classes are illustrated.
Fig. 7 is a table in which the frequency of each small-classification class and user judgment are collected.
Fig. 8 is a flow diagram illustrating an example of processing executed by the information processing device (in other words, a control method executed by the information processing device).
Fig. 9 is a flowchart in image analysis according to Embodiment 1.
Fig. 10 is a dendrogram of a work process flow in cycle work.
Fig. 11 is a conceptual diagram illustrating large classifications and small classifications obtained by the operation of an image analysis part according to the present embodiment and their features.
Fig. 12 is a flowchart in image analysis according to Embodiment 2.
Fig. 13 is a conceptual diagram illustrating trends in first standard work and second standard work.
Fig. 14 is a histogram for ascertaining a trend in standard work according to a distance from the center of a certain standard work.
Fig. 15 is a block diagram illustrating main components of an information processing device and the like according to Embodiment 4.
Fig. 16 is a diagram in which class determination information for each small-classification class is expressed as a histogram indicating the frequency of occurrence with respect to work time.
Fig. 17 is included in a graph area corresponding to a specific work time range on the histogram.
Fig. 18 is a diagram in which a work process group consisting of a plurality of work processes is divided into a plurality of groups.
Fig. 19 is a conceptual diagram illustrating a work flow according to Embodiment 6.
Fig. 20 is a table illustrating feature amounts of the work flow according to Embodiment 6.
Fig. 21 is a conceptual diagram illustrating a work flow in batch work.

### Description of Embodiments

### [Embodiment 1]

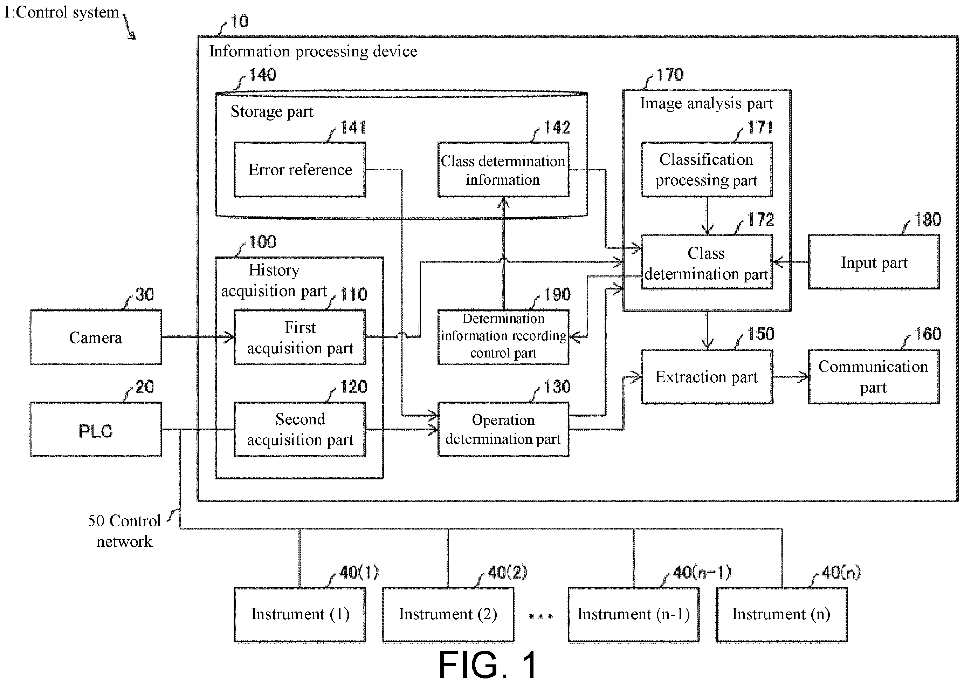

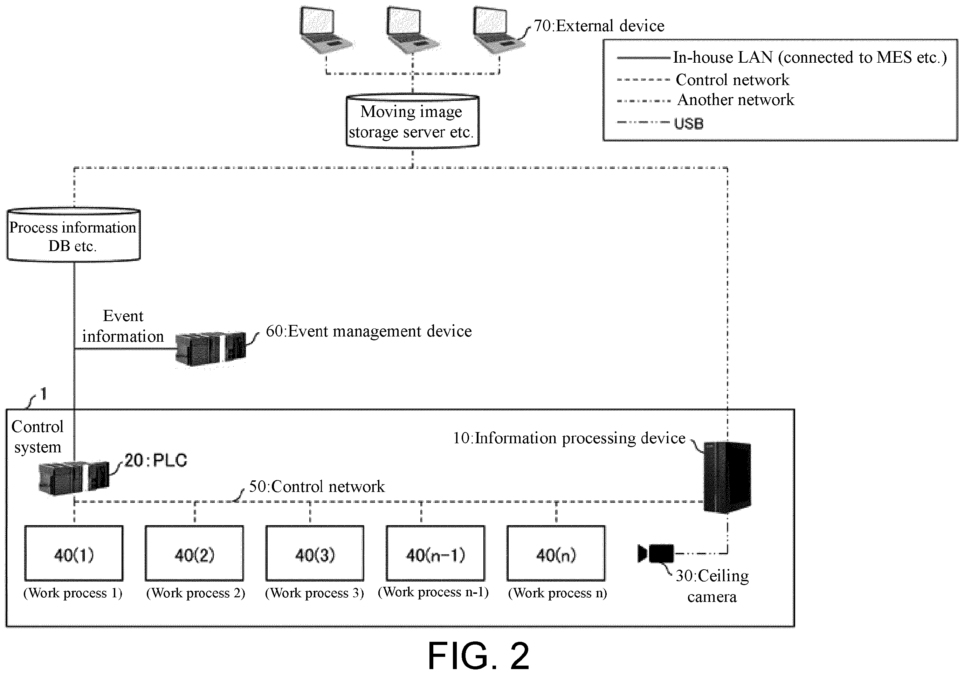

Hereinafter, an embodiment according to an aspect of the present invention (hereinafter also referred to as "the present embodiment") will be described with reference to Figs. 1 to 11. Meanwhile, the same or equivalent portions in the drawings are denoted by the same reference numerals and signs, and thus description thereof will not be repeated. In the present embodiment, for example, an information processing device 10 will be described as a typical example of a data extraction device. In order to facilitate understanding of the information processing device 10 according to an aspect of the present invention, first an outline of a control system 1 and the like including the information processing device 10 will be described with reference to Fig. 2. In the following description, it is assumed that "n" indicates "an integer equal to or greater than 1," and "m" indicates "an integer equal to or greater than 1 and equal to or less than n."

### §1. Application example

### (Work site and work process)

Fig. 2 is a diagram illustrating an overall outline of the control system 1 and the like including the information processing device 10 (work management device). A camera 30 shown in Fig. 2 is installed on the ceiling of a work site WS, and generates basic imaging data BI which is imaging data obtained by capturing an image of the entire work site WS.

The work site WS is a production site such as a factory, and at the work site WS, for example, various types of products are produced through a plurality of work processes Pr(1), Pr(2), Pr(3), ···, Pr(n). The plurality of work processes Pr(1), Pr(2), Pr(3), ···, Pr(n) implemented at the work site WS are, for example, a "painting" process, an "assembly of a main workpiece" process, an "assembly of a main workpiece into its body" process, and an "inspection" process.

Regarding the work processes Pr, in a case where it is necessary to distinguish the plurality of work processes Pr from each other, they are distinguished from each other by adding suffixes such as "(1),'' "(2)," "(3)," ···, "(n)" to the reference signs. For example, "work process Pr(1)," "work process Pr(2)," "work process Pr(3)," ···, "work process Pr(n)" are described for distinction. In a case where it is not particularly necessary to distinguish the plurality of work processes Pr from each other, they are simply referred to as the "work process Pr."

### (Monitoring area)

The work site WS includes a plurality of monitoring areas Ar(1), Ar(2), Ar(3), ···, Ar(n). The plurality of monitoring areas Ar(1), Ar(2), Ar(3), ···, Ar(n) are associated with the plurality of work processes Pr(1), Pr(2), Pr(3), ···, Pr(n), respectively. That is, the monitoring area Ar(m) is an area where a worker Pe performs an operation Op(m) related to the implementation of the work process Pr(m), for example, an area where an instrument 40(m) is disposed. For example, the worker Pe performs the operation Op(m) related to the work process Pr(m) in the monitoring area Ar(m) using the instrument 40(m).

As with the work process Pr, in a case where it is necessary to distinguish the plurality of monitoring areas Ar from each other, they are distinguished from each other by adding suffixes such as "(1)," "(2)," "(3)," ···, "(n)" to the reference signs, and in a case where it is not particularly necessary to distinguish them from each other, they are simply referred to as the "monitoring area Ar."

### (Basic imaging data)

One camera 30 which is a wide-area imaging camera is installed on the ceiling of the work site WS. However, it is not essential that the camera 30 is installed on the ceiling of the work site WS, and the camera 30 need only be installed at a position where the entire work site WS can be overlooked. The camera 30 overlooks the entire work site WS and generates the basic imaging data BI which is imaging data (flow moving image data) obtained by capturing an image of the entire work site WS. A plurality of analysis target areas Aa(1), Aa(2), Aa(3), ···, Aa(n) corresponding to the plurality of monitoring areas Ar(1), Ar(2), Ar(3), ···, Ar(n), respectively, are set in advance in the basic imaging data BI.

As with the monitoring area Ar, in a case it is necessary to distinguish where the plurality of analysis target areas Aa from each other, they are distinguished from each other by adding suffixes such as "(1)," "(2)," "(3)," ···, "(n)" to the reference signs, and in a case where it is not particularly necessary to distinguish them from each other, they are simply referred to as the "analysis target area Aa."

The analysis target area Aa is a target area for image analysis performed by the information processing device 10 with respect to the basic imaging data BI. By setting the analysis target area Aa in the basic imaging data BI, it is possible to efficiently execute image analysis with respect to the basic imaging data BI for recognizing the status of the monitoring area Ar. However, it is not essential to set the analysis target area Aa in the basic imaging data BI. The analysis target area Aa may be set with respect to the basic imaging data BI by the information processing device 10 in accordance with a user's operation.

### (Work and worker)

During the implementation of each of the plurality of work processes Pr(1), Pr(2), Pr(3), ···, Pr(n), each of the plurality of operations Op(1), Op(2), Op(3), ···, Op(n) is performed by the worker Pe. In a case where it is necessary to distinguish the plurality of operations Op from each other, they are distinguished from each other by adding suffixes such as "(1)," "(2)," "(3)," ···, "(n)" to the reference signs, and in a case where it is not particularly necessary to distinguish them from each other, they are simply referred to as the "operation Op."

In addition, there are one or more workers Pe, for example, who execute the operation Op(m) related to the implementation of the work process Pr(m) at the work site WS, and the worker Pe is identified by, for example, a worker ID attached to the top of a cap worn by the worker Pe or the like. Specifically, the worker Pe(1) and the worker Pe(2) present at the work site WS are identified by a worker ID: Pe(1) attached to a cap worn by the worker Pe(1) and a worker ID: Pe(2) attached to a cap worn by the worker Pe(2), respectively. In a case where it is necessary to distinguish the plurality of workers Pe from each other, they are distinguished from each other by adding suffixes such as "(1)," "(2)," "(3)," ···, "(n)" to the reference signs, and in a case where it is not particularly necessary to distinguish them from each other, they are simply referred to as the "the worker Pe."

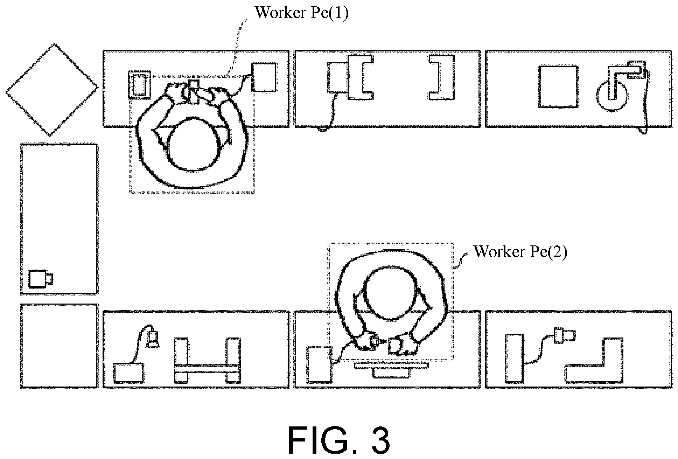

Fig. 3 is a diagram illustrating an image of the basic imaging data BI acquired from the camera 30 of the information processing device 10. As shown in Fig. 3, the information processing device 10 executes image analysis on the basic imaging data BI, determines whether the worker Pe is present at the work site WS, and specifies a worker ID of the worker Pe who is present at the work site WS when it is determined that the worker Pe is present at the work site WS.

### (Action and instrument)

During the implementation of each of the plurality of work processes Pr(1), Pr(2), Pr(3), ···, Pr(n), each of a plurality of actions Ac(1), Ac(2), Ac(3), ···, Ac(n) is executed by the instrument 40. That is, the plurality of actions Ac(1), Ac(2), Ac(3), ···, Ac(n) are associated with the plurality of work processes Pr(1), Pr(2), Pr(3), ···, Pr(n), respectively. In a case where it is necessary to distinguish the plurality of actions Ac from each other, they are distinguished from each other by adding suffixes such as "(1),'' "(2)," "(3)," ···, "(n)" to the reference signs, and in a case where it is not particularly necessary to distinguish them from each other, they are simply referred to as the "action Ac."

In addition, each of the plurality of instruments 40 is used to implement the plurality of work processes Pr, that is, the work process Pr and the instrument 40 are associated in advance with each other. For example, one or more instruments 40(m) are used to implement the work process Pr(m). That is, one or more instruments 40(1) are used to implement the work process Pr(1). Specifically, three instruments 40(1), that is, instruments 40(1-1), 40(1-2), and, 40(1-3), may be used. Similarly, one or more instruments 40(2) are used to implement to work process Pr(2), and one or more instruments 40(3) are used to implement the work process Pr(3). In a case where it is necessary to distinguish the plurality of instruments 40 associated with the plurality of work processes Pr, respectively, from each other, they are distinguished from each other by adding suffixes such as "(1)," "(2)," "(3)," ···, "(n)" to the reference signs, and in a case where it is not particularly necessary to distinguish them from each other, they are simply referred to as the "instrument 40."

Here, one instrument 40 may be used to implement the plurality of work processes Pr. This can be rephrased as follows, assuming that variables "p," "q," "x," and "y" each indicate "an integer equal to or greater than 1," and that "q" is different from "p" and "y" is different from "x." That is, the instrument 40(p-x) used to implement the work process Pr(p) and the instrument 40(q-y) used to implement the work process Pr(q) may be the same instrument 40.

### (Master-slave control system)

The plurality of instruments 40 used to implement the plurality of work processes Pr at the work site WS are controlled by a programmable logic controller (PLC) 20 serving as a line controller. That is, the control system 1 is constructed as a master-slave control system in which the PLC 20 is used as a master and each of the plurality of instruments 40 is used as a slave, and each of the plurality of instruments 40 is communicably connected to the PLC 20 through a network (a control network 50). The PLC 20 is called a "master" in the sense that it manages data transmission through the control network 50. The terms "master" and "slave" are defined with a focus on the control function of data transmission on the control network 50, and there is no particular limitation to what kind of information is transmitted and received between the devices.

The PLC 20 is a control device (controller) that controls the entire control system 1 and is communicably connected to each of the plurality of instruments 40. The PLC 20 acquires information from each of the plurality of instruments 40 serving as input devices (measurement devices) as input data. The PLC 20 executes arithmetic processing using the acquired input data in accordance with a user program incorporated in advance. The PLC 20 executes the above arithmetic processing to determine control content for the control system 1, for example, to determine control content for each of the plurality of instruments 40 serving as output devices such as actuators, and outputs control data corresponding to the control content to each of the plurality of instruments 40. The PLC 20 repeatedly executes acquisition of input data from each of the plurality of instruments 40 and acquisition of control data to each of the plurality of instruments 40 at a predetermined period (control period). The PLC 20 may be connected to, for example, a display part and an operation part (not shown). The display part is constituted by a liquid crystal panel or the like capable of displaying an image, and the operation part is typically constituted by a touch panel, a keyboard, a mouse, or the like.

The instrument 40 is a slave in the control system 1 serving as a master-slave control system with the PLC 20 as a master. The instrument 40 is an input device that repeatedly transmits input data to the PLC 20 at each predetermined control period, or is an output device that repeatedly receives control data from the PLC 20 at each predetermined control period and operates in accordance with the received control data. The instrument 40 may be, for example, a sensor (for example, a photoelectric sensor) serving as an input device that transmits detection results and the like to the PLC 20 as input data, may be a bar code reader that transmits reading results, or may be an inspection machine (tester) that transmits inspection results. In addition, the instrument 40 may be a programmable terminal (PT) to which a plurality of input devices are connected. Further, the instrument 40 may be a robot or the like serving as an output device that executes screw fastening, picking, or the like.

The control network 50 transmits various types of data received by the PLC 20 or transmitted by the PLC 20, can typically use various types of industrial Ethernet (registered trademark), and is sometimes referred to as a field network. Examples of known industrial Ethernet (registered trademark) include EtherCAT (registered trademark), Profinet IRT, MECHATROLINK (registered trademark)-III, Powerlink, SERCOS (registered trademark)-!!!, CIP Motion, and the like, and any of these may be adopted. Further, field networks other than industrial Ethernet (registered trademark) may be used. For example, in a case where motion control is not performed, DeviceNet, CompoNet/IP (registered trademark), or the like may be used.

The control system 1 in which data is transmitted and received between the PLC 20 (master) and the instrument 40 (slave) by data frames being sequentially transmitted on the control network 50 will be described below. That is, by data frames being sequentially transmitted on the control network 50 at a predetermined control period, data is repeatedly transmitted and received between the PLC 20 and the instrument 40 at each control period. By data frames being sequentially transmitted on the control network 50, data may be transmitted and received between the plurality of instruments 40, that is, between a plurality of slaves.

### (Process information)

In the control system 1 which is a master-slave control system with the instrument 40 as a slave, the PLC 20 which is a master repeatedly receives, for example, at each predetermined control period, an action result La indicating the content and result of the action Ac executed by the instrument 40 from the instrument 40 which is a slave. That is, the instrument 40 repeatedly transmits the action result La indicating the content and result of the action Ac actually executed during the implementation of the work process Pr to the PLC 20 at a predetermined period. For example, the instrument 40(m) repeatedly transmits the action result La(m) indicating the content and result of the action Ac(m) executed during the implementation of the work process Pr(m) to the PLC 20 at a control period.

The PLC 20 acquires, for example, a measurement result which is a result of a measurement action executed by the instrument 40 serving as an input device (measurement device) as the action result La of the instrument 40. In addition, in a case where the instrument 40 is an inspection machine, the PLC 20 acquires the result of the inspection action executed by the instrument 40, for example, the inspection result that "the inspection standard is satisfied or not satisfied," as the action result La of the instrument 40. Further, the PLC 20 acquires, for example, the result of the output action executed by the instrument 40 serving as an output device as the action result La of the instrument 40. In a case where the instrument 40 is a robot that executes screw fastening, picking, or the like, the PLC 20 acquires an action result La such as the number of times screw fastening is performed or a picking result (picking success or picking error) as the action result La of the instrument 40.

The PLC 20 repeatedly receives the action result La indicating the content and result of the action Ac actually executed by the instrument 40 during the implementation of the work process Pr from the instrument 40 at a predetermined period, and transmits (that is, transfers) the received action result La as process information to the information processing device 10. In addition, the PLC 20 transmits the information generated using the action result La repeatedly received from the instrument 40 at a predetermined period as process information to the information processing device 10.

Further, the PLC 20 may transmit the action result La repeatedly received from the instrument 40 at a predetermined period as process information to the outside of the control system 1. For example, the PLC 20 may transmit the action result La repeatedly received from the instrument 40 at a predetermined period as process information to the in-house local area network (LAN) shown in Fig. 2 connected to a manufacturing execution system (MES) or the like.

Although the details will be described later, in an example to be described below, the information processing device 10 specifies an operation start time Tms, an operation completion time Tme, and an operation period Da of the action Ac executed by the instrument 40 during the implementation of the work process Pr from the process information, particularly, from the action result La.

However, the above determination of the action result La (particularly, the action Ac) included in the process information may be executed by the PLC 20, and the PLC 20 may transmit the result of the above determination to the information processing device 10 by including the result in the process information or replacing it with the process information.

In the above description, the operation start time Tms is a point in time when the instrument 40 used in the work process Pr starts to execute the action Ac during the implementation of the work process Pr, and the operation completion time Tme is a point in time when the execution of the action Ac is completed. The operation period Da is a period from the operation start time Tms to the operation completion time Tme.

### (Systems and devices other than master-slave control system)

Fig. 2 shows an in-house LAN system, other network systems, and the like in addition to the control system 1 serving as a master-slave control system. The in-house LAN is connected to a process information database (DB) or the like which is also referred to as MES.

The process information DB stores data related to production in each work process. The data related to production includes the measurement result, operation status, and the like of the instrument 40 used to implement the work process Pr.

In addition, in the example shown in Fig. 2, an event management device 60 that monitors and manages various events that occur at the work site WS is connected to the process information DB serving as MES through the in-house LAN. However, it is not essential that the event management device 60 is connected to the process information DB through the in-house LAN, and the event management device 60 may not be provided.

Further, the PLC 20 is connected to the process information DB through the in-house LAN. Although not shown in the drawing, the process information DB and the information processing device 10 may be connected to each other. In addition, enterprise resources planning (ERP), a warehouse management system (WMS), or the like (not shown) may be connected to the in-house LAN in addition to the MES.

In Fig. 2, a moving image storage server or the like is connected to the process information DB through "another network" different from both the control network 50 and the in-house LAN. The information processing device 10 is connected to the moving image storage server or the like through another network, and partial imaging data OD transmitted from the information processing device 10 is stored in the moving image storage server or the like. In addition, an external device 70 realized by a personal computer (PC) or the like is connected to the moving image storage server or the like, and the external device 70 displays, for example, the partial imaging data OD and executes visualization of process information or the like. That is, the external device 70 displays a list of information necessary to improve the work process Pr, and displays information indicating the bottleneck work process Pr, the date and time of an error that has occurred in the work process Pr, or the like in association with the corresponding partial imaging data OD.

As described above, the camera 30 captures an image of the entire work site WS to generate basic imaging data BI, and transmits the generated basic imaging data BI to the information processing device 10 through, for example, a communication cable which is a universal serial bus (USB) cable.

The information processing device 10 is, for example, a work management device which is realized by a PC or the like and combines process information acquired from the PLC 20 and the basic imaging data BI acquired from the camera 30 to enable efficient use of both. The information processing device 10 can also be said to be a device that visualizes process information including "the action result La indicating the content and result of the actual action Ac of the plurality of instruments 40 in the work site WS" in combination with the basic imaging data BI.

Further, the information processing device 10 performs clustering on the basis of a plurality of pieces of imaging data, and quantitatively evaluates the similarity relationship between the imaging data. In addition, it is possible to determine whether the clustered class is standard work or non-standard work depending on user judgment and to determine whether it is cycle work or non-cycle work depending on whether to deviate from a predetermined work order. Therefore, it becomes possible to specify and improve non-standard work or non-cycle work in a production site where a plurality of products are produced.

In addition, the information processing device 10 is communicably connected to the camera 30 through, for example, a universal serial bus (USB) cable. The information processing device 10 acquires the basic imaging data BI in which an image of the entire work site WS is captured from the camera 30.

### §2. Configuration example

The outline of the control system 1 and the like has been described so far with reference to Figs. 2 and 3. Before the details of the information processing device 10 will be described with reference to Fig. 1 and the like, the outline of the information processing device 10 organized as follows in order to facilitate understanding of the information processing device 10.

That is, the information processing device 10 (data extraction device) includes a history acquisition part 100 that acquires work history information which is a history of information on results of implementation performed by workers in a work process group including a plurality of work processes, a classification processing part 171 that classifies at least some of the implementation result information in the work process group included in the work history information acquired by the history acquisition part 100 into any of a plurality of classes, and, a class determination part 172 that determines that a plurality of the classes among the classes classified by the classification processing part 171 are standard classes in which no issues occur during work and determines that a plurality of the classes other than those are non-standard classes in which issues are likely to occur during work.

The information processing device 10 further includes a determination information recording control part 190 that performs control for recording the determination result for each of the classes determined on the basis of the user input by the class determination part 172 as class determination information.

According to the above configuration, since the determination result for each class of the user can be recorded as class determination information, it is possible to automatically perform class determination using the class determination information.

### (Details of information processing device)

Fig. 1 is a block diagram illustrating main components of the information processing device 10 and the like included in the control system 1. As shown in Fig. 1, the information processing device 10 includes, as functional blocks, the history acquisition part 100, an operation determination part 130, a storage part 140, an extraction part 150, a communication part 160, an image analysis part 170, an input part 180, and a determination information recording control part 190. In addition, the history acquisition part 100 includes a first acquisition part 110 and a second acquisition part 120. Further, the image analysis part 170 includes the classification processing part 171 and the class determination part 172.

The history acquisition part 100, the operation determination part 130, the storage part 140, the extraction part 150, the communication part 160, the image analysis part 170, and the input part 180 can be realized, for example, by a central processing unit (CPU) or the like reading out and executing a program stored in a storage device (the storage part 140) realized by a read only memory (ROM), a non-volatile random access memory (NVRAM), or the like into a random access memory (RAM) or the like (not shown). First, the history acquisition part 100, the operation determination part 130, the storage part 140, the extraction part 150, the communication part 160, the image analysis part 170, the input part 180, and the determination information recording control part 190 in the information processing device 10 will be described below.

The history acquisition part 100 is a functional block that acquires information from each part of the control system 1 and inputs the information to the information processing device 10.

The first acquisition part 110 acquires the basic imaging data BI which is imaging data obtained by the camera 30 capturing an image of the entire work site WS from the camera 30, and outputs the acquired basic imaging data BI to the image analysis part 170.

The second acquisition part 120 acquires process information from the PLC 20 and outputs the acquired process information to the operation determination part 130. The process information is "the 'action result La of the instrument 40' acquired from the instrument 40 by the PLC 20" and "information generated by the PLC 20 using the acquired 'action result La of the instrument 40.'" That is, the process information includes the action result La, and the action result La is information indicating the content and result of the action Ac actually executed by the instrument 40 during the implementation of the work process Pr. In a case where the PLC 20 uses "the action result La(m) of the instrument 40(m)" to execute operation determination on the action Ac(m) executed by the instrument 40(m), the process information may include the determination result of the operation determination on the action Ac(m) performed by the PLC 20.

The operation determination part 130 uses the process information acquired from the second acquisition part 120 to determine "whether an intra-process error has occurred" with respect to the actual action Ac executed by the instrument 40 used to implement the work process Pr. Examples of the intra-process error include an equipment abnormality of the instrument 40, and a product defect, a standard defect, or the like detected by inspection performed by the instrument 40 or the like. That is, when the process information (particularly, the action result La) is acquired from the second acquisition part 120, the operation determination part 130 confirms the presence or absence of the intra-process error included in the process information and makes a determination.

The operation determination part 130 specifies the work process Pr(m) corresponding to the action Ac(m) in which it is determined that an intra-process error has occurred, and notifies the extraction part 150 of information indicating the specified work process Pr(m) (extraction target information).

The operation determination part 130 specifies, for example, the operation start time Tms(m) which is "the time when the instrument 40(m) starts 'the action Ac(m) in which it is determined that an intra-process error has occurred"' from the process information, specifically, from the action result La(m) of the instrument 40(m). In addition, the operation determination part 130 specifies, for example, the operation completion time Tme(m) which is "the time when the instrument 40(m) completes 'the action Ac(m) in which it is determined that an intra-process error has occurred'" from the process information, specifically, from the action result La(m) of the instrument 40(m). The operation determination part 130 notifies the extraction part 150 of the operation start time Tms(m) and the operation completion time Tme(m) specified for "the action Ac(m) in which it is determined that an intra-process error has occurred" as extraction target information indicating the work process Pr(m) corresponding to "the action Ac(m) in which it is determined that an intra-process error has occurred." The time (period) of "the action Ac(m) in which it is determined that an intra-process error has occurred" from the operation start time Tms(m) to the operation completion time Tme(m) is also referred to as "cut-off time," that is, information indicating "cut-off time" is an example of the extraction target information. The time (period) of the action Ac(m) from the operation start time Tms(m) to the operation completion time Tme(m) is also referred to as the operation period Da(m) in the sense of "a period during which the action Ac(m) is executed."

The operation determination part 130 specifies the work process Pr(m) corresponding to the action Ac(m) in which it is determined that an intra-process error has not occurred, and notifies the image analysis part 170 of information indicating the specified work process Pr(m) (non-extraction target information). That is, the operation determination part 130 notifies the image analysis part 170 of information indicating the work process Pr(m) corresponding to the action Ac(m) in which "no intra-process error has occurred" (non-extraction target information).

Here, the operation determination part 130 notifies the image analysis part 170 of the extraction target information to cause the image analysis part 170 to specify the work process Pr corresponding to the action Ac other than "the action Ac in which it is determined that an intra-process error has occurred." For example, the operation determination part 130 may notify the image analysis part 170 of information indicating the "cut-off time" to cause the image analysis part 170 to specify a time other than the "cut-off time."

The operation determination part 130 may notify the operation start time Tms(m), the operation completion time Tme(m), and, the operation period Da(m) of the action Ac(m) specified using the action result La(m) to the image analysis part 170.

The image analysis part 170 performs image analysis on a work process group performed by the worker Pe in the work process Pr corresponding to the action Ac other than "the action Ac in which it is determined by the operation determination part 130 that 'an intra-process error has occurred.'" As a result of the image analysis, the work process group is classified into classes, and then it is determined whether the work process group is cycle work or non-cycle work. In addition, it is determined whether the work process group is standard work or non-standard work. The details of the operation in the image analysis part 170 will be described later.

After the work process Pr is classified into a plurality of classes, work according to a predetermined work order (implementation order) is cycle work, and work different from the predetermined work order is non-cycle work. That is, the term "cycle work" often refers to steady work at a production site, that is, work for actually producing a product such as assembly, and replenishment, setup, or the like of parts for that purpose. A class which is cycle work is also referred to as a normal work order class. On the other hand, the term "non-cycle work" often refers to non-steady work at a production site, for example, maintenance of equipment and setup or the like during product changeover. A class which is non-cycle work is also referred to as an abnormal work order class.

In addition, the standard work is work performed in accordance with work content specific to cycle work. A class which is standard work is also referred to as a standard class. On the other hand, the non-standard work is work performed without according to specific work content for each cycle work or non-cycle work, or work in which an intra-process error or the like has occurred, including abnormal work. A class which is non-standard work is also referred to as a non-standard class. In addition, a class which is abnormal work is also referred to as an abnormal class. Here, the non-standard class may include not only abnormal work but also work having no issues which is not standard work.

The image analysis part 170 may execute flow analysis that makes it possible to accurately ascertain the presence, movement, and the like of the worker Pe as image analysis for the imaging data ID (the basic imaging data BI), and detect the central coordinates of the worker Pe, the worker ID, and the like.

The image analysis part 170 specifies the work process Pr corresponding to the operation Op determined as non-standard work, and notifies the extraction part 150 of information indicating the specified work process Pr (extraction target information).

The extraction part 150 acquires the extraction target information indicating the work process Pr corresponding to "the action Ac in which it is determined that an intra-process error has occurred" from the operation determination part 130, and extracts the partial imaging data OD from the basic imaging data BI using the acquired extraction target information. That is, the extraction part 150 uses the extraction target information acquired from the operation determination part 130 to extract imaging data Id(m) obtained by capturing an image of the implementation status of the work process Pr(m) corresponding to "the action Ac(m) in which it is determined that an operation reference Sa(m) is satisfied," as the partial imaging data OD, from the basic imaging data BI. For example, the extraction part 150 acquires the time (that is, cut-off time) of "the action Ac(m) in which it is determined that an intra-process error has occurred" from the operation start time Tms(m) to the operation completion time Tme(m) from the operation determination part 130. The extraction part 150 extracts the imaging data Id equivalent to the acquired cut-off time in the basic imaging data BI as the partial imaging data OD.

In addition, the extraction part 150 acquires the extraction target information indicating the work process Pr corresponding to "the operation Op determined as non-standard work" from the image analysis part 170, and extracts the partial imaging data OD from the basic imaging data BI using the acquired extraction target information.

The extraction part 150 outputs the partial imaging data OD extracted from the basic imaging data BI, that is, the imaging data Id extracted as the partial imaging data OD from the basic imaging data BI, to the communication part 160.

The communication part 160 transmits the imaging data Id extracted as the partial imaging data OD from the basic imaging data BI by the extraction part 150 to the outside of the control system 1, for example, transmits it to the moving image storage server or the like shown in Fig. 2.

The storage part 140 is a storage device that stores various types of data used by the information processing device 10. Meanwhile, the storage part 140 may non-temporarily store (1) control program executed by the information processing device 10, (2) an OS program, (3) application programs for executing various functions of the information processing device 10, and (4) various types of data to be read out when the application programs are executed. The above data of (1) to (4) are stored in a non-volatile storage device such as, for example, a read only memory (ROM), a flash memory, an erasable programmable ROM (EPROM), EEPROM (registered trademark)(Electrically EPROM), or a hard disc drive (HDD). The information processing device 10 may include a temporary storage part (not shown). The temporary storage part is a so-called working memory that temporarily stores data uses for calculation, results of calculation, and the like in the course of various processes executed by the information processing device 10, and is constituted by a volatile storage device such as a random access memory (RAM). Which data is to be stored in which storage device is appropriately determined from the purpose of use, convenience, cost, physical restrictions, or the like of the information processing device 10. The storage part 140 further stores an error reference 141 and class determination information 142.

The error reference 141 is a reference which is set in advance for each "action Ac executed by the instrument 40 used to implement the work process Pr," specifically, information indicating "the content and result of a standard operation to be executed by the instrument 40 used to implement the work process Pr." For example, "the error reference 141: inspection result - good" is set in advance in "the work process Pr(m): the instrument 40(m) used to implement an inspection process: the action Ac(m) executed by an inspection machine: an inspection action." In addition, "the error reference 141: picking success" is set in advance in "the work process Pr(m): the instrument 40(m) used to implement a picking process: the action Ac(m) executed by a picking machine: a picking operation." Further, "the error reference 141: the number of revolutions p to η (>p) times" is set in advance in "the work process Pr(m): the instrument 40(m) used to implement a screw fastening process: the action Ac(m) executed by a screw fastening machine: a screw fastening operation."

That is, the error reference 141 is a reference for detecting at least one of the action result La that the instrument 40 used to implement a certain work process Pr has detected an abnormality and the action result La that there is an abnormality in the action Ac of the instrument 40 used to implement a certain work process Pr.

The class determination information 142 is "a determination result such as standard or non-standard which is a result of the implementation of the work process Pr," and is associated with the feature amount of the class. That is, it is used to acquire unknown class determination information by comparing the unknown class determination information with some known class determination information.

The input part 180 is a functional block that receives and process a user input with respect to the image analysis part 170. The details thereof will be described later.

The determination information recording control part 190 stores the input determination information as the class determination information 142 in the storage part 140.

### (Flow analysis)

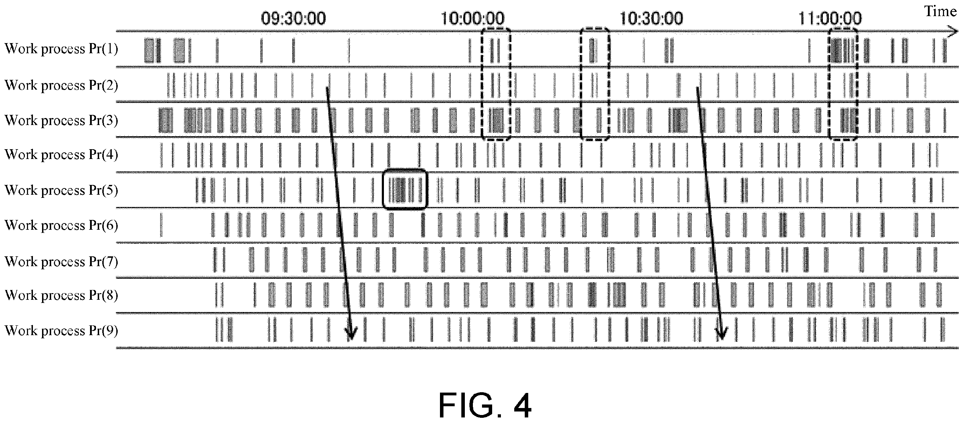

Fig. 4 is an example of flow analysis in the work process Pr of which a certain worker Pc is in charge. As shown in Fig. 4, a transition diagram (flow) with the time on the horizontal axis and the work process Pr on the vertical axis is obtained by performing flow analysis. As shown by the arrows in Fig. 4, basically, description will be based on a case where a certain worker Pe repeatedly works nine work processes Pr, that is, the work process Pr(1) to the work process Pr(9).

However, as cycle work of a certain product type (for example, product type A) to be produced in a predetermined work process, a work process group from the work process Pr(1) to the work process Pr(9) does not necessarily continue to be repeated at a constant rhythm. For example, in order to produce a product type B similar to the product type A next to the product type A, in a case where a setup for product type changeover is performed and then the product type B is produced, both the setup to the product type B and the production of the product type B are cycle work. In addition, the processing order of predetermined work processes may be incorrect due to a mistake in the work procedure, or the processing order of predetermined work processes may be changed due to error handling or the like, and these are non-cycle work. In this way, production continues with a mixture of a plurality of cycle works and a plurality of non-cycle works.

In this way, actually, as shown by the solid-line frame in Fig. 4, an event in which the flow stays in the work process Pr(5) occurs. In addition, as shown by the broken-line frames in Fig. 4, an event in which the work process Pr(1) to the work process Pr(3) are repeated occurs. Therefore, the work process at a production site does not consist only of repeating a constant work.

In addition, in the flow analysis, it is necessary to determine the work process Pr(1) which is the start point of a plurality of work processes Pr and the work process Pr(n) which is the last of a series of work processes Pr, that is, until the work process Pr(1) is started again. This section from the work process Pr(1) to the work process Pr(n) is a work process period Dat performed by a certain worker Pe for one product. In the subsequent processing of the image analysis part 170, the analysis is performed on the work process flow obtained by dividing the flow for each work process period Dat. Here, the work process flow is obtained by dividing the flow obtained in flow analysis into a series of cycle work units (or a series of non-cycle work units) for each one product.

### (Classification processing part 171)

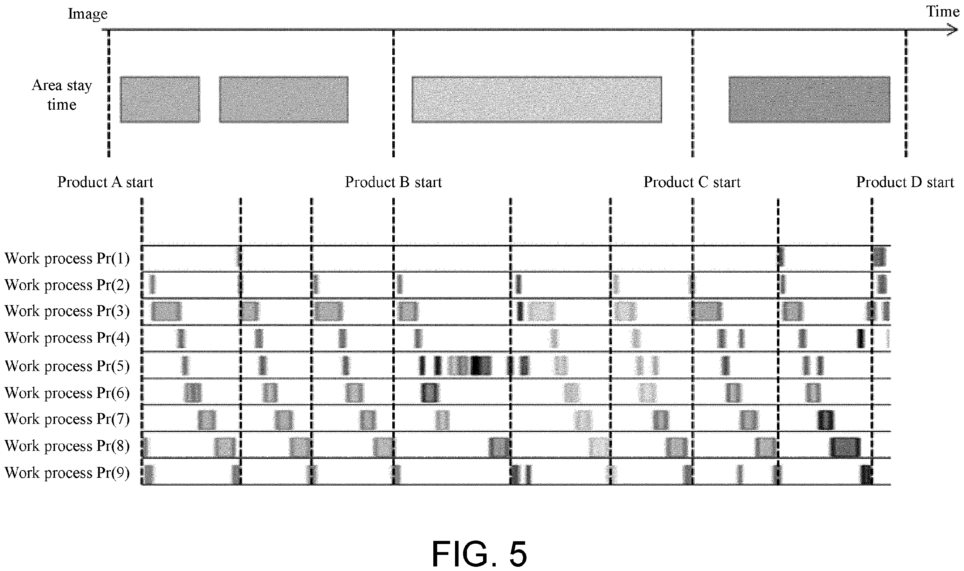

Fig. 5 is a diagram in which a flow is divided into units of work process flows through flow analysis. The classification processing part 171 is a functional block that compares a large number of work process flows and classifies them into work process flows showing similar trends. That is, the classification processing part 171 can also be said to be a functional block that performs clustering on a large number of work process flows on the basis if the degree of similarity.

The classification processing part 171 first calculates the degree of similarity with respect to the work process flows obtained by dividing the flow, and classified them into small-classification classes which are similar to each other (with high degree of similarity). For each small-classification class, the work process flow is confirmed to determine whether the work is processed in a predetermined work process order and classified into large-classification classes of cycle work and non-cycle work. Here, the large-classification classes are not limited to cycle work and non-cycle work, and may be classified according to other references, or the number of large-classification classes may be three or more.

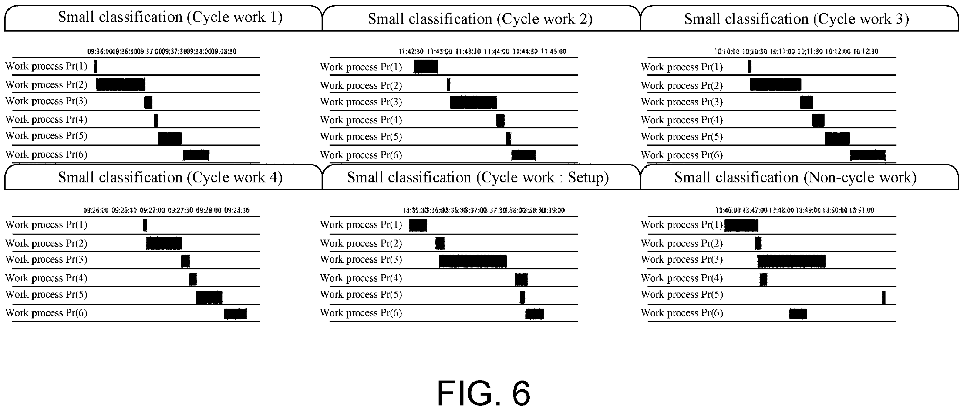

Fig. 6 is a conceptual diagram in which a large number of work process flows are divided into small-classification classes and representatives of the small-classification classes are illustrated. As shown in Fig. 6, the small-classification classes are a collection of work process flows showing similar trends, and different small-classification classes result in work process flows with different trends.

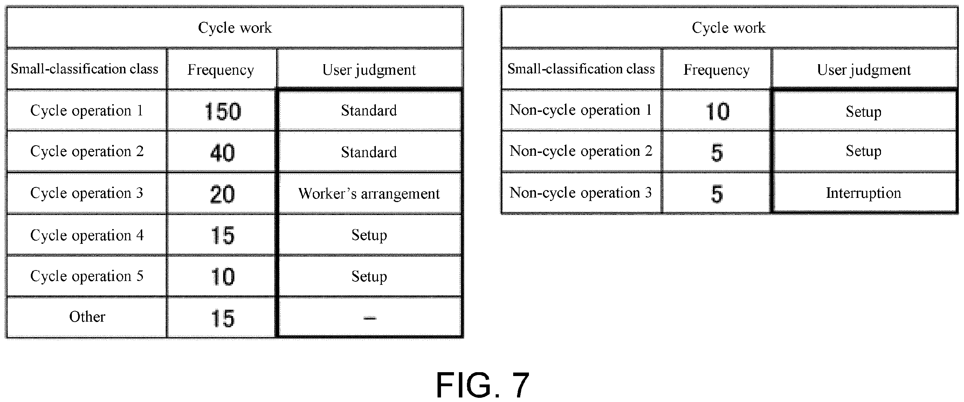

Fig. 7 is a table in which the frequency of each small-classification class and user judgment are collected. The frequency of each small-classification class represents the number of work process flows included in the small-classification class, and the user judgment is the labeling of the small-classification class. Hereinafter, cases of cycle work, non-cycle work, standard work, non-standard work, and abnormal work will be described in detail with reference to Fig. 7.

As shown in Fig. 7, the cycle work includes standard work in which the user judgment is "standard" such as a cycle operation 1 or a cycle operation 2, and non-standard work in which the user judgment is "setup" such as a cycle operation 4 or a cycle operation 5. In addition, there is abnormal work in which the user judgment is "worker's arrangement" such as a cycle operation 3. Further, there may be small-classifications such as "other" which are not classified into small-classification classes.

In addition, as shown in Fig. 7, the non-cycle work includes non-standard work in which the user judgment is "setup" such as a non-cycle operation 1 or a non-cycle operation 2. In addition, there is abnormal work in which the user judgment is "interruption" such as a non-cycle operation 3.

Therefore, as shown by the fact that there are small-classification classes in which the user judgment is "setup" in both the cycle work and the non-cycle work, the same user-judged small-classification class is not necessarily restricted to either cycle work or non-cycle work.

Further, as a specific example of the abnormal work, as shown by the cases where the user judgment is "worker's arrangement" and "interruption," interrupting predetermined work in the middle or changing the content of the predetermined work is recognized as the abnormal work.

### (Class determination part 172)

The class determination part 172 determines what kind of class each of the small-classification classes classified by the classification processing part 171 is. Specifically, the class determination part 172 determines whether the class to be determined is a standard class in which no issues occur during the work process Pr or a non-standard class in which issues are likely to occur during other work processes Pr.

The determination made by the class determination part 172 includes a method based on a user input and a method based on the class determination information 142. The details of the method based on a user input will be described later in Embodiment 1. The method based on the class determination information 142 will be described in Embodiment 2. In addition, the class determination part 172 outputs the determination result to the determination information recording control part 190. Further, the class determination part 172 can display flows and imaging data on the basis of instructions of the input part 180. Therefore, while flows and work moving image data are confirmed, the determination result may be allocated to each large-classification class or small-classification class.

### (Determination information recording control part 190)

The determination information recording control part 190 stores the determination result on which a user input is performed in the class determination part as the class determination information 142 in the storage part 140.

### §3. Operation example

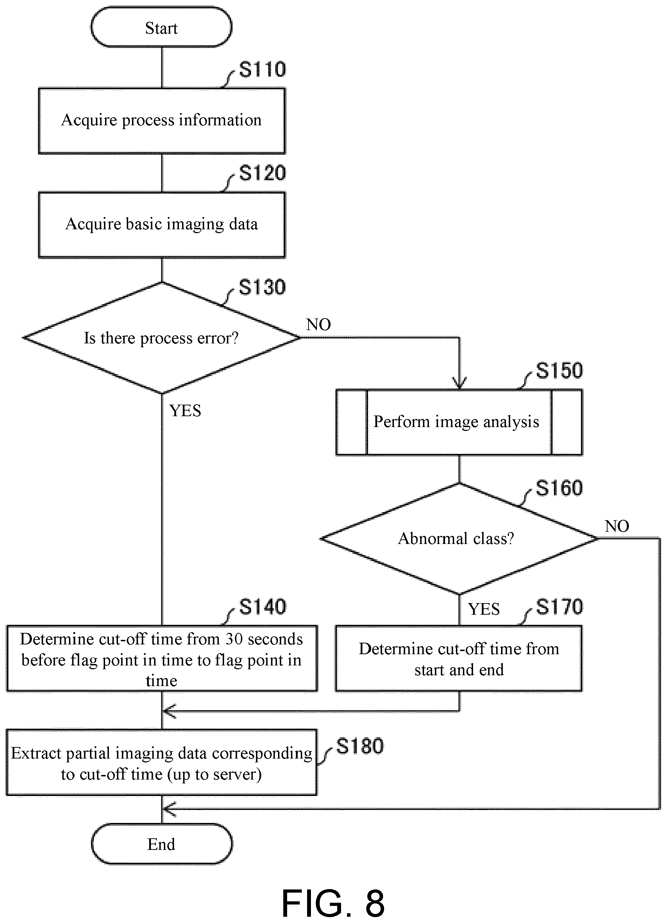

Fig. 8 is a flow diagram illustrating an example of processing executed by the information processing device 10 (in other words, a control method executed by the information processing device 10). In order to facilitate understanding of the processing shown in Fig. 8, the outline will be first described as follows. That is, the processing (control method) executed by the information processing device 10 includes a history acquisition step (S110, S120) of acquiring a work information group which is a history of information on results of implementation performed by workers in a work process group including the plurality of work processes Pr, a classification processing step (S150) of classifying at least some of the implementation result information in the work process group included in the work history information acquired in the history acquisition step into any of a plurality of classes, and a class determination step (S160) of determining that a plurality of the classes among the classes classified in the classification processing step are standard classes in which no issues occur during work and determining that a plurality of the classes other than those are non-standard classes in which issues are likely to occur during work.

According to the above configuration, the implementation result information of each of the work process group is classified into classes, and a plurality of standard classes in which it is determined that no issues have occurred during work are provided. In the past, only one such standard class has been provided, and it has been determined that issues have occurred even in implementation result information in which no issues have occurred. On the other hand, according to the above configuration, since a plurality of classes to be determined that no issues have occurred can be flexibly set, it is possible to make a determination which is more suitable for the actual situation.

Next, the details of the processing executed by the information processing device 10 of which the outline has been described above will be described with reference to Fig. 8. As shown in Fig. 8, first, the second acquisition part 120 acquires process information from the PLC 20 (S110). Specifically, the second acquisition part 120 acquires the action result La(m) indicating the content and result of the actual action Ac(m) executed during the implementation of the work process Pr(m) by the instrument 40(m) used to implement the work process Pr(m), as the process information, from the PLC 20. In addition, the first acquisition part 110 acquires basic imaging data from the camera 30 (S120). The process information and the basic imaging data are also referred to as work history information.

### (Determination of intra-process error)

The operation determination part 130 uses the process information acquired from the PLC 20 by the second acquisition part 120 to determine "whether an intra-process error has occurred" with respect to the action Ac executed by the instrument 40 during the implementation of the work process Pr. Specifically, the operation determination part 130 uses the action result La(m) included in the process information to determine "whether an intra-process error has occurred in the action Ac(m) actually executed by the instrument 40(m) during the implementation of the work process Pr(m)."

### (S130: Presence or absence of intra-process error)

In order to determine "whether an intra-process error has occurred in the action Ac(m)," the operation determination part 130 first uses the action result La(m) to determine "whether an intra-process error has occurred in the action Ac(m) executed by the instrument 40(m) during the implementation of the work process Pr(m)" (S130).

### (S140: Case where there is intra-process error)

In a case where it is determined that "an intra-process error has occurred in the action Ac(m)" (Yes in S130), the process proceeds to S140. The operation determination part 130 generates, for example, the following information as the extraction target information indicating the work process Pr(m) corresponding to the action Ac(m) in which it is determined that an intra-process error has occurred. That is, the operation determination part 130 specifies the point in time when an intra-process error has occurred as a "flag point in time." The operation determination part 130 determines the time from a point in time before a predetermined period (for example, 30 seconds) from the specified flag point in time to the flag point in time as a "cut-off time," that is, as extraction target information indicating the work process Pr(m) corresponding to the action Ac(m) in which an intra-process error has occurred (S140). The operation determination part 130 notifies the extraction part 150 of the determined "cut-off time."

### (S150: Case where there is no intra-process error)

In a case where it is not determined that "an intra-process error has occurred in the action Ac(m)" (No in S130), the process proceeds to S150. The image analysis part 170 makes the following determination through image analysis. That is, the image analysis part 170 specifies the work process Pr(m) performed by the worker Pe(x) through image analysis on the imaging data ID(m), and specifies whether the work process Pr(m) is a standard class or a non-standard class (S150). A specific image analysis process will be described later.

As a result of the image analysis, it is determined whether the work process Pr(m) belongs to an abnormal class (S160). In a case where the action Ac(m) does not belong to an abnormal class (No in S160), the operation flowchart ends.

### (S170: Case of abnormal class)

In a case where the work process Pr(m) belongs to an abnormal class (Yes in S160), the process proceeds to S170 to determine the "cut-off time" (S170). That is, the image analysis part 170 determines the "cut-off time" with respect to the work process Pr(m) from the start (that is, stay start point in time Tos(m)) and the completion (that is, stay end point in time Toe(m)) of the work process Pr(m).

The image analysis part 170 notifies the extraction part 150 of the determined "cut-off time" as the extraction target information indicating the work process Pr(m). The extraction part 150 extracts the captured moving image (the imaging data Id) corresponding to the "cut-off time" determined in S170 as the partial imaging data OD from the basic imaging data BI (S180).

That is, the image analysis part 170 determines whether the work process Pr(m) performed by the worker Pe(x) during the implementation of the work process Pr(m) is an abnormal class through image analysis on the basic imaging data BI, particularly, the imaging data Id(m) in the basic imaging data BI. The extraction part 150 extracts the imaging data Id(m) regarding the situation in which the work process Pr(m) determined to belong to an abnormal class by the image analysis part 170 is performed as the partial imaging data OD from the basic imaging data BI.

### (Flow of image analysis processing)

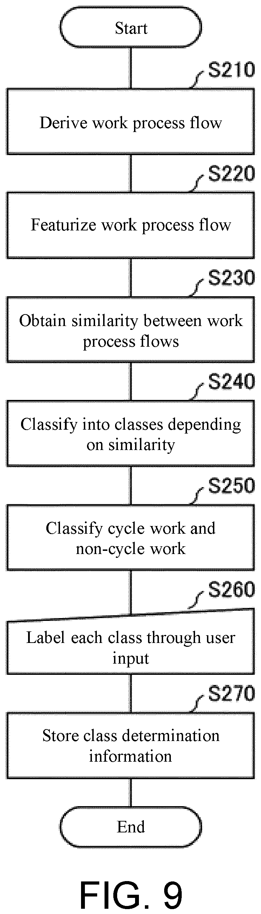

Fig. 9 is a flowchart in image analysis according to Embodiment 1. An example of image analysis executed by the image analysis part 170 and a process of specifying a standard class and a non-standard class will be described below with reference to Fig. 9.

### (Image analysis processing (1): derivation of work process flow)

The image analysis part 170 performs image analysis on the imaging data Id(m) in the basic imaging data BI, and derives the work process flow of the work process Pr(m) (S210). In deriving the work process flow, the operation start time Tms(m) and the operation completion time Tme(m) of the work process Pr(m) are referred to from the action result La(m) included in the process information to derive the period of each work process Pr(m) constituting the work process flow. The work process flow is configured by the transition of each work process Pr(m).

In addition, the derivation of the work process flow is not limited to derivation based on information obtained from the process information. For example, the period of each work process Pr(m) can be derived from a history of movement between the monitoring areas Ar(m) using the basic imaging data BI of the camera 30.

### (Image analysis processing (2): featurization of work process flow)

The work process flow is a flow having the actually measured length of work time of one product. Therefore, it is difficult to uniquely compare the work process flows. Consequently, the image analysis part 170 performs a featurization process on the work process flows (S220).

As the featurization, for example, normalization in the direction of time and featurization in terms of the number of times movement is performed and the work time for each monitoring area may be performed. The featurization makes it possible to compare the work process flows. A method of featurization is not limited to these, and any method may be used.

The feature amount acquired from the work process flow is also referred to as implementation result information. Since the implementation result information can be acquired from the imaging data, the implementation result information including a plurality of work processes can be acquired without imposing a burden on a worker.

### (Image analysis processing (3): degree of similarity between work process flows)

The image analysis part 170 obtains the degree of similarity between the work process flows (S230). That is, the degree of similarity, for example, distance, between the work process flows is calculated by comparing the featurized work process flows. The distance may be any distance such as Euclidean distance, Manhattan distance, Mahalanobis distance, Minkowski distance, humming distance, and Chebyshev distance. The degree of similarity is not limited to the distance, and may be an index by which any differences can be quantified and compared.

### (Image analysis processing (4): class classification based on degree of similarity)

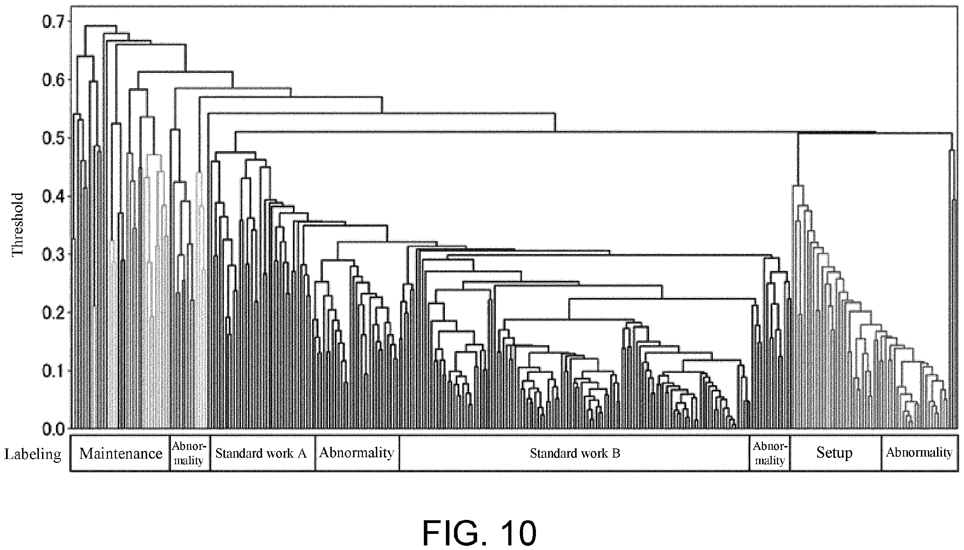

Fig. 10 is a dendrogram based on the degree of similarity of work process flows in cycle work. The dendrogram is a diagram in which clusters are constructed in the form of a tree diagram for a certain sample group. Therefore, by using the distance as a threshold with respect to the dendrogram, a sample group can be classified (clustered) into several small units of sample groups.

As shown in Fig. 10, the classification processing part 171 first classifies the work process flow group into small-classification classes with a certain threshold with respect to the distance (S240).

### (Image analysis processing (5): classification of cycle work and non-cycle work according to work order)

The classification processing part 171 confirms the work order for each small-classification class and determines whether it is the same as a predetermined work order as a large-classification class (S250). That is, in a case where the work order is the same as the predetermined work order, it is determined as cycle work, and in a case where the work order is different from the predetermined work order, it is determined as non-cycle work.

### (Image analysis processing (6): labeling through user input)

The class determination part 172 uses the input part 180 to perform labeling on each small-classification class through user input (S260). Specifically, the class determination part 172 performs labeling on each small-classification class as to whether it is standard work or non-standard work (including abnormal work). The class determination part 172 outputs the label for each small-classification class as determination information to the determination information recording control part 190.

For example, the class determination part 172 performs labeling on the cycle work as standard work A (production of a certain product type), standard work B (production of another product type), maintenance, and setup in the small-classification classes shown in Fig. 10 through user input. In addition, the abnormal work is determined through user input such as "worker's arrangement" and "interruption" in the middle of work.

During labeling based on user judgment, the imaging data corresponding to each small-classification class is displayed to the user, and then the user determines whether each small-classification class is abnormal work and what kind of work (such as "standard" or "worker's arrangement") it is. At this time, the types of cycle work and non-cycle work in the small-classification class can be displayed to the user. In the case of the non-cycle work, the user can confirm the imaging data on the premise that it belongs to a class in which issues are likely to occur during work, and thus the accuracy of determining whether the work is abnormal work is improved.

Therefore, the class determination part 172 can perform labeling by presenting the implementation result information after classification to the user. Therefore, it is possible to eliminate the work of individually confirming and labeling a huge amount of implementation result information which has been necessary in the past, and to efficiently specify the work in which issues have occurred. In addition, at the time of labeling, it is possible to determine whether the class is a standard class, a non-standard class, or an abnormal class while the imaging data is confirmed, and to perform the determination work accurately and efficiently.

### (Image analysis processing (7): storage of class determination information)

The determination information recording control part 190 stores the input determination information as the class determination information 142 in the storage part 140 (S270). The class determination information 142 is stored together with the feature amount of each class in addition to the label of each class. Therefore, using the class determination information 142 stored by the determination information recording control part 190, it is also possible to perform class determination on unknown implementation result information.

### §4. Operations and effects

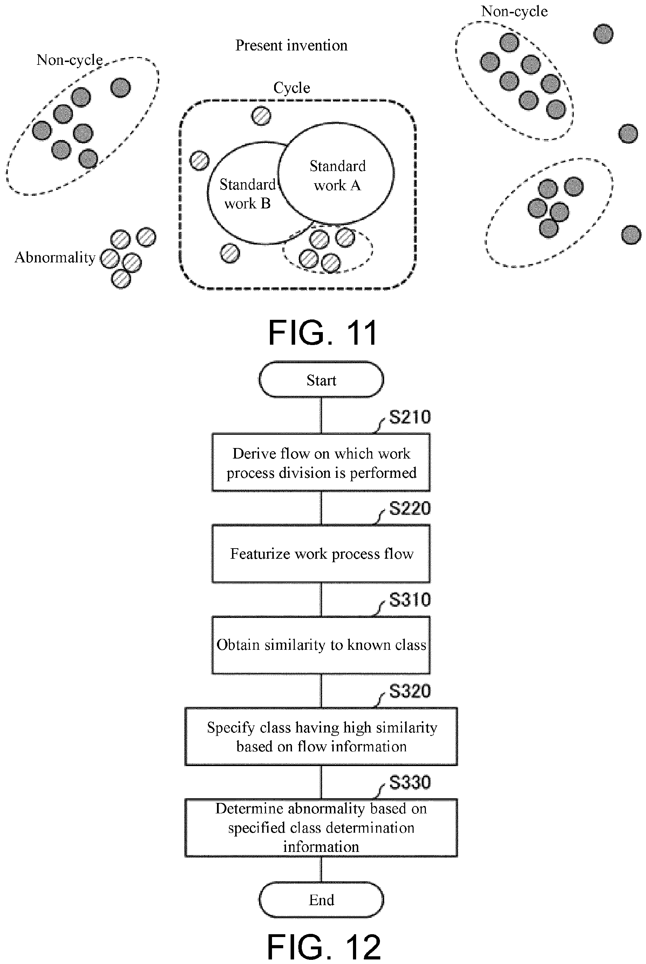

Fig. 11 is a conceptual diagram illustrating large-classification classes and small-classification classes obtained by the operation of the image analysis part 170 according to the present embodiment and their features. As shown in Fig. 11, in the present embodiment, the work process flow group is first classified into a plurality of small-classification classes. Further, each small-classification class is classified into large-classification classes depending on whether it is in a predetermined work order.

The dashed lines shown in Fig. 11 represent large-classification classes, and the hatched circles represent non-standard work (including abnormal work). That is, it can be understood that the cycle work includes standard work A and standard work B which are standard work, and that there are a plurality of work process groups which are similar to them but are abnormal. In addition, the non-cycle work has a work order different from that of the cycle work, and there may be a plurality of non-cycle works. For each, it can be understood that there are a work process group in which no issues have occurred and a work process group in which there is an abnormality.

Therefore, in the present embodiment, it is possible to define a plurality of standard works. On the other hand, only one standard work could be defined in the past, but in the present embodiment, a plurality of classes to be determined can be flexibly set, and thus it is possible to make a determination which is more suitable for the actual situation.

In addition, it is possible to classify a plurality of small-classification classes by performing featurization using the work process flow. Therefore, by confirming some of the imaging data with respect to the clustered small-classification classes, each class can be labeled, and the amount of imaging data to be confirmed can be reduced more than in the related art.

In addition, the non-cycle work is non-steady work which is more infrequent than the cycle work, and often involves work procedure errors or work mistakes. Therefore, the non-cycle work is more likely to be abnormal work than the cycle work, and the user is more careful in making a determination. Therefore, higher-accuracy determination is possible in the non-cycle work.

### [Embodiment 2]

Another embodiment of the present invention will be described below. Meanwhile, for convenience of description, members having the same functions as those of the members described in the above embodiment are denoted by the same reference numerals and signs, and thus description thereof will not be repeated.

In Embodiment 2, the known classes classified in Embodiment 1 are used to specify a work process group whose class is unknown as a known class. That is, for a work process flow group obtained by collecting the implementation status of a work process group in advance, known small-classification classes are specified, and the feature amount and label of each work process flow are specified.

Fig. 12 is a flowchart in image analysis according to Embodiment 2. An example of image analysis executed by the image analysis part 170 and a process of determining a standard class and a non-standard class will be described below with reference to Fig. 12.

As shown in Fig. 12, in S210 and S220, the same processing as in Fig. 9 is performed to perform the acquisition and featurization of the work process flow.

### (Image analysis processing (8): calculation of degree of similarity for known class)

The image analysis part 170 obtains the degree of similarity of a work process whose class is unknown to a known small-classification class on the basis of the implementation result information obtained from new implementation (S310). Specifically, the degree of similarity may be any distance.

### (Image analysis processing (9): specify corresponding class which is unknown class)

The classification processing part 171 specifies a class having the highest degree of similarity of unknown implementation result information to a known class (S320). The classification processing part 171 may output the specified small-classification class of the unknown class to the class determination part 172.

### (Image analysis processing (10): specify class determination information)

The class determination part 172 refers to the class determination information of the specified small-classification class which is the specified unknown implementation result information, and determines the specified unknown class in accordance with the class determination information of the specified small-classification class (S330). That is, in a case where the specified known small-classification class is standard work, the unknown class is also standard work, and in a case where the specified known small-classification class is non-standard work, the unknown class is also non-standard work.

Therefore, by calculating the degree of similarity of the unknown implementation result information to the known class, the image analysis part 170 can compare it with the known small-classification class, specify the class determination information of the unknown implementation result information, and obtain the label (determination result) of the unknown implementation result information from the class determination information. Therefore, it is possible to automatically specify whether the unknown implementation result information belongs to a standard class, a non-standard class, or an abnormal class without user judgment, and to easily specify an abnormality in the work process. This makes it possible to maintain and improve the work process efficiently.

### [Modification example]

### (Integration of information processing device 10 and PLC 20)

As shown in Fig. 2, an example in which the information processing device 10 and the PLC 20 are communicably connected to each other through the control network 50 has been described so far. However, it is not essential to connect the information processing device 10 and the PLC 20 through the control network 50.

For example, the information processing device 10 and the PLC 20 may be communicably connected to each other through an internal bus, or the information processing device 10 and the PLC 20 may be integrated. That is, the information processing device 10 may be configured as an industrial PC (IPC) in which the information processing device 10 and the PLC 20 are integrated.

### (Another configuration of information processing device 10)

Unlike Fig. 1, the information processing device need only include the history acquisition part 100, the classification processing part 171, the class determination part 172, and the input part 180 instead of including the operation determination part 130, the extraction part 150, and the communication part 160. That is, the information processing device need only have a functional block that makes it possible to execute clustering using the above-described work process flow.

In this case, since the number of functional blocks is smaller than that of the information processing device 10, the cost can be reduced, and it can function as an inexpensive learning machine and a determination machine.

### [Embodiment 3]

Another embodiment of the present invention will be described below. Meanwhile, for convenience of description, members having the same functions as those of the members described in the above embodiment are denoted by the same reference numerals and signs, and thus description thereof will not be repeated.

### (Subdivision of standard work)

Similarly to the classification processing part 171 of Embodiment 1, the classification processing part 171 of Embodiment 3 first calculates the degree of similarity and classifies it into small-classification classes in accordance with the degree of similarity. Thereafter, for each small-classification class, the work process flow is confirmed to determine whether the work is processed in a predetermined work process order, and the work is classified into large-classification classes of cycle work and non-cycle work.

On the other hand, unlike the class determination part 172 of Embodiment 1, the class determination part 172 of Embodiment 3 determines a certain standard work A (standard class) as one standard work C and at least one standard work D which are further subdivided.

Since both the standard work C and the standard work D are standard work, the work proceeds in a predetermined work process order according to the work content specific to the cycle work, but the standard work C and the standard work D have different trends in the implementation result information in each work process. For example, in the standard work C, work can be performed without any issues, whereas in the standard work D, a delay in work time occurs in a range where the work process order does not change. An example of the standard work D is, for example, a case where the work process takes a long time because it took some time to fasten the bolts.

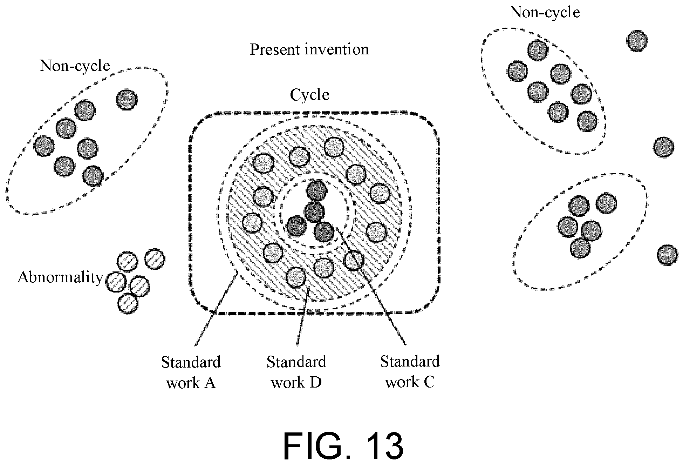

Fig. 13 is a conceptual diagram illustrating trends in the standard work C and the standard work D. As shown in Fig. 13, among areas divided concentrically from the center of the area of the standard work A, the area including the center is the area of the standard work C, and the area outside the area of the standard work C is the area of the standard work D. That is, the class determination part 172 divides the standard work A into a plurality of standard work areas on the basis of the distance from the center thereof. Although the number of areas to be divided is two in Fig. 13, there is no limitation on the number.

In this way, by dividing the standard work into further subdivided standard works, it is possible to ascertain more detailed trends of work content that may occur even during the standard work. This makes it easier to implement countermeasures in accordance with such trends.

### (Histogram of subdivided standard work)

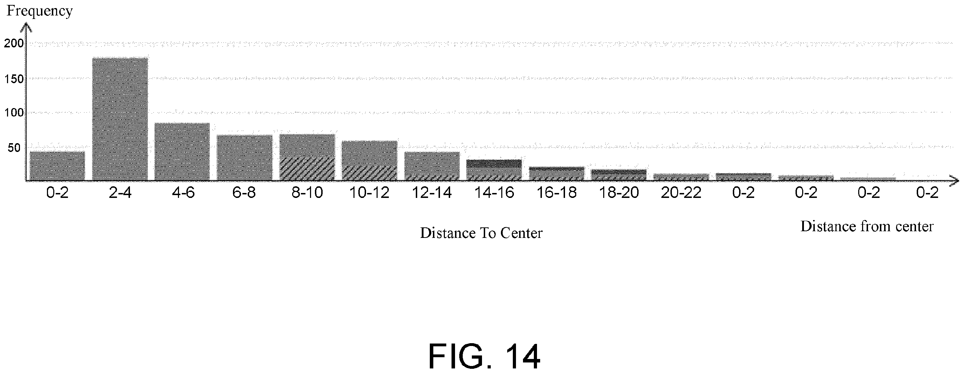

Fig. 14 is a histogram for ascertaining a trend in standard work according to a distance from the center of a certain standard work. The horizontal axis in Fig. 14 is a distance from the center of a certain standard work (for example, standard work A), and the vertical axis plots the frequency of occurrence of each small-classification class at each distance. Meanwhile, in Fig. 14, the frequency of each small-classification class is indicated by the type of hatching.

In the example shown in Fig. 14, by determining that a small-classification class with a distance from the center of 8 or less is the standard work C and a small-classification class with a distance from the center of 8 to 14 is the standard work D, the small-classification class determined as a standard class can be divided into a plurality of standard classes.

By the class determination part 172 making the determination as described above, it is possible to distinguish and identify, even during standard work, the standard work C in which appropriate work is performed and the standard work D in which there is room for improvement. Thus, it is possible to specify the standard work D in which there is room for improvement and to take measures for further work optimization and efficiency improvement.

Meanwhile, standard work which is distant from the center of a certain standard work A, such as the standard work D, may be referred to as quasi-standard work. In the quasi-standard work, the work time is long as described above, and taking measures from such quasi-standard work leads to an increase in the frequency of standard work and an improvement in the quality of the work process.

### [Embodiment 4]

Another embodiment of the present invention will be described below. Meanwhile, for convenience of description, members having the same functions as those of the members described in the above embodiment are denoted by the same reference numerals and signs, and thus description thereof will not be repeated.

### (Histogram generation part)

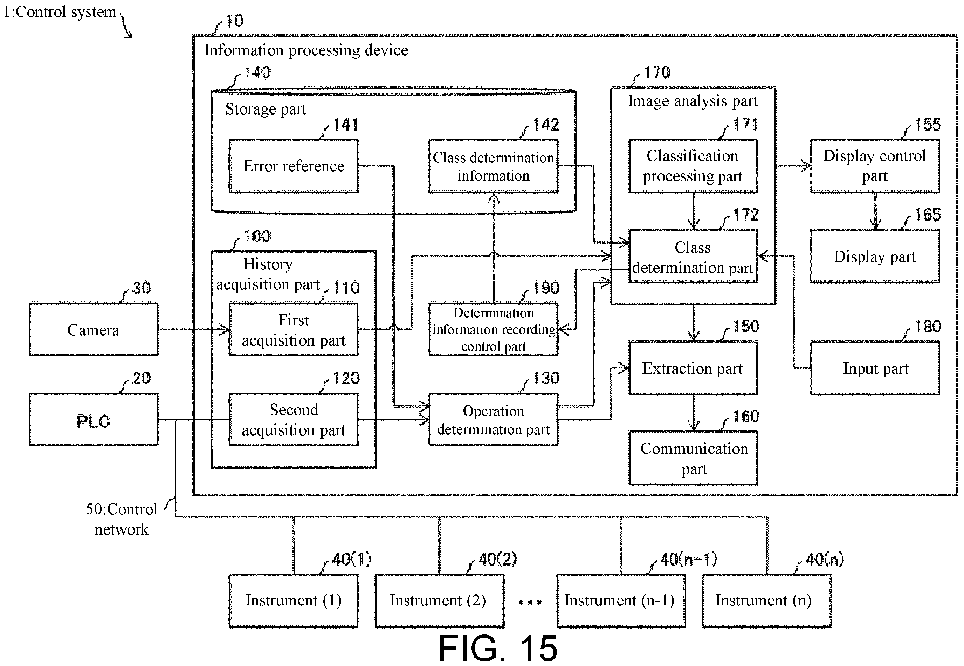

Fig. 15 is a block diagram illustrating main components of the information processing device 10 and the like according to the present embodiment. As shown in Fig. 1, the information processing device 10 includes a display control part 155 and a display part 165 in addition to the components shown in the embodiment. The display control part 155 creates data of a histogram to be described later on the basis of the class determination result of the class determination part 172, and performs display control on the display part 165.

Meanwhile, the function of the display control part 155 may be executed by an external information processing terminal connected to the information processing device 10. That is, the class determination result of the class determination part 172 may be transmitted from the communication part 160 to an external information processing terminal, and histogram display processing may be performed in this external information processing terminal.

### (Histogram with respect to work time)

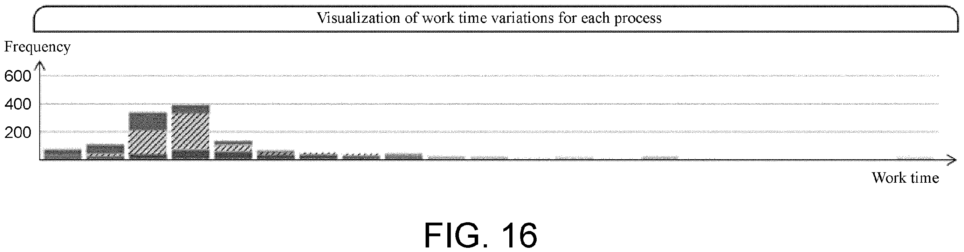

Fig. 16 is a diagram in which class determination information for each small-classification class is expressed as a histogram indicating the frequency of occurrence with respect to work time. In this histogram, the display format of a graph (such as color or hatching) is displayed distinctly in accordance with the type of class determination information.

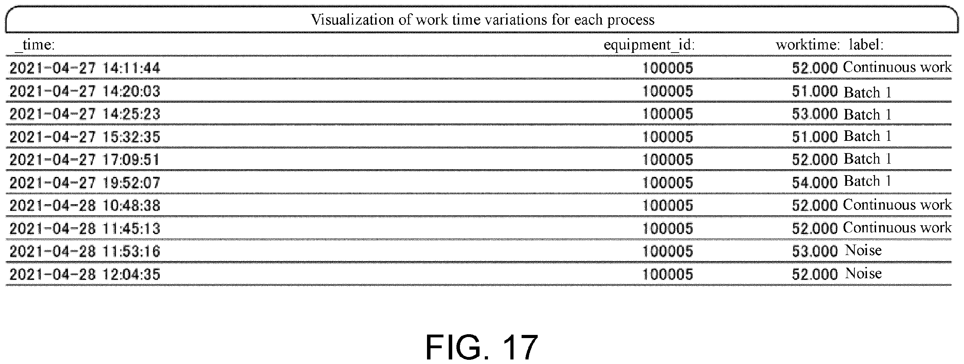

When a graph area corresponding to a specific work time on the histogram is selected by the user, the display as shown in Fig. 17 may be performed. Fig. 17 is a list of results of actual class determination information included in a graph area corresponding to a specific work time range on the histogram. When the class determination information in the list is selected by the user, a moving image corresponding to the corresponding class determination information may be played back. The list displays task times, task IDs, labels, and the like. In addition, the selection of the list may be performed by displaying all the pieces of class determination information corresponding to a specific work time range, or may be performed by displaying only the class determination information corresponding to the type of class determination information designated in the work time range.

According to the above, the user can specify the work time range in which issues are likely to occur by confirming the histogram, and easily confirm the actual work status in the work time range. In addition, confirming a moving image as the actual work status can also be smoothly executed in a flow of a series of confirmation processes.

Meanwhile, the histogram of Fig. 16 and the list of Fig. 17 may be collectively displayed on one screen.

### [Embodiment 5]

Another embodiment of the present invention will be described below. Meanwhile, for convenience of description, members having the same functions as those of the members described in the above embodiment are denoted by the same reference numerals and signs, and thus description thereof will not be repeated.

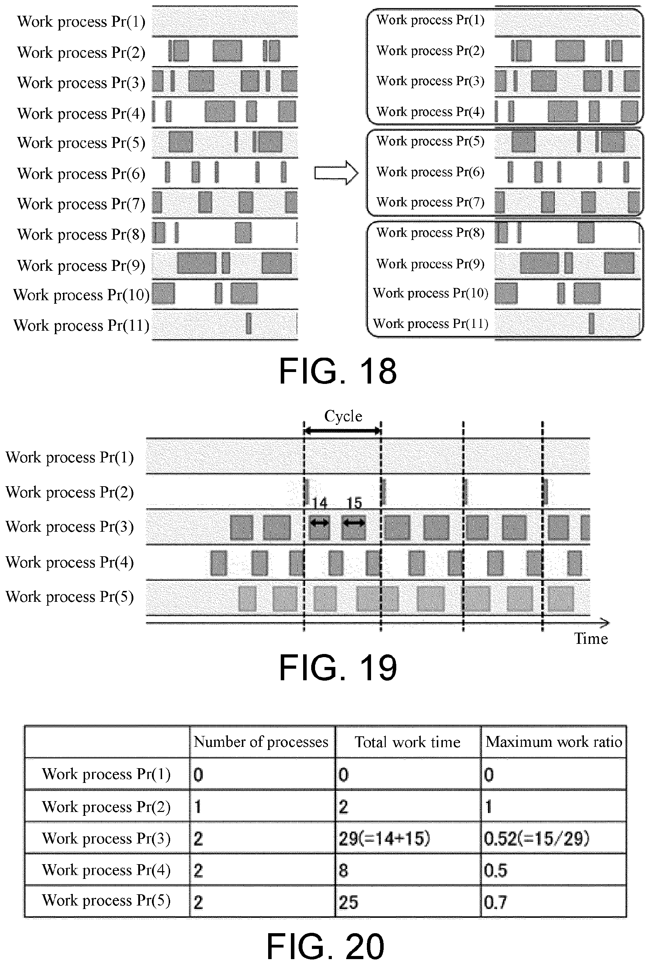

Fig. 18 is a diagram in which a work process group consisting of a plurality of work processes Pr is divided into a plurality of groups (work groups). For each group, a feature amount is extracted, the group is sorted into small-classification classes by the classification processing part 171, and class determination information for the class is generated by the class determination part 172.

Here, setting the criterion for division into a plurality of groups as the change timing of a worker in each work process Pr can be considered. For example, a case where a work process group is performed by three workers is considered. In Fig. 18, it is assumed that a worker A is in charge of the work process Pr(1) to the work process Pr(4) as a first group, a worker B is in charge of the work process Pr(5) to the work process Pr(7) as a second group, and a worker C is in charge of the work process Pr(8) to the work process Pr(9) as a third group.

In this way, by dividing a series of work process groups into a plurality of groups, class determination is performed on the basis of feature amounts in which work characteristics specific to the groups are reflected. Thus, it is possible to perform class determination exposing issues that could not be recognized in a case where class determination is performed in consideration of all the work process groups.

For example, in a case where the workers are divided into groups, class determination based on the work characteristics of each worker can be performed, and thus it is possible to appropriately classify and divide cases where there are issues during work performed by a specific worker.

Meanwhile, the user may select one or a plurality of groups for which class determination is performed among the plurality of groups. In a case where one group is selected by the user, class determination will be performed only by that group.

In addition, in a case where a plurality of groups are selected by the user, class determination may be performed on each group, or the work process group included in the selected group may collectively undergo the class determination.

In addition, the selection of groups is not limited to being performed by the user, and may be automatically performed on the basis of a predetermined reference determined in advance. Examples of the predetermined reference include a work process group to be implemented by a specific worker, a work process group including a predetermined work process, and the like.

### [Embodiment 6]

Another embodiment of the present invention will be described below. Meanwhile, for convenience of description, members having the same functions as those of the members described in the above embodiment are denoted by the same reference numerals and signs, and thus description thereof will not be repeated.

### (Feature amount)

In Embodiment 1, the work flow is used as a feature amount, but in Embodiment 6, the number of processes, the total work time, and the maximum work ratio are used instead of the work flow.

The number of processes is the number of times the target work process Pr is performed during one cycle. Therefore, the number of processes may be plural (for example, two). Meanwhile, the number of times a worker has entered a predetermined area of the corresponding process obtained by performing image analysis on the captured image of a work place may be recognized as the number of processes.

The total work time is a sum of the time spent working in the target work process Pr. At this time, in a case where the number of processes is plural, the sum of all the processes is used.

The maximum work ratio is a ratio of the total work time to the maximum work time required for the work process Pr for the number of processes. That is, the maximum work ratio indicates the degree of deviation of each work time in a case where the number of processes is plural.

Fig. 19 is a conceptual diagram illustrating a work flow according to Embodiment 6. As shown in Fig. 19, a work process group including the work processes Pr(1) to (5) will be described. After the work is performed once in the work process Pr(2), the work is performed in the work process Pr(3), the work is performed in the work process Pr(4), the work is performed again in the work process Pr(3), and the work is performed again in the work process Pr(4). In parallel with these, another worker is performing the work of the work process Pr(5). In addition, it is also possible to add empty work which has substantially no work, such as the work process Pr(1), to the work process group.

Fig. 20 is a table illustrating feature amounts of the work flow according to Embodiment 6. Here, a description will be given with focus on the work process Pr(3). The work process Pr(3) has two work processes performed. Therefore, the number of processes is two. These two work processes Pr(3) have work times of 14 seconds and 15 seconds, respectively, and thus the total work time is 14 + 15 = 29 seconds. In addition, the maximum work ratio is 15/29 = 0.52.

In a case where the value obtained by multiplying the maximum work ratio by the number of processes (0.52 × 2 = 1.04) is a value close to 1, work is being performed at a relatively equal rate in the work process Pr. On the other hand, for example, in a case where the work time is 5 seconds and 24 seconds (the total work time is 29 seconds), the maximum work ratio is 24/(5 + 24) = 0.83, and the value obtained by multiplying the maximum work ratio by the number of processes (0.83 * 2 = 1.66) is a value far from 1. In such a case, work is performed at an equal rate in the work process Pr. That is, the work flow can be modeled simply by using the number of processes, the total work time, and the maximum work ratio as feature amounts.

### (Classification based on feature amount)

A feature amount based on the number of processes, the total work time, and the maximum work ratio is derived for each work process (for example, 5 work processes × 3 feature amounts = 15 feature amounts), and each class is classified. A K-means method may be used as a clustering method for classifying classes. In addition, the clustering method to be used may be a clustering method such as a dendrogram and Gaussian mixture model (GMM) clustering.

Euclidean distance may be used as the distance for the K-means method. In addition, as the distance, other definitions of distance such as Mahalanobis distance, Manhattan distance, and humming distance may be used.

Each small-classification class classified by clustering is labeled and output as class determination information to the determination information recording control part 190.

### (Batch work)

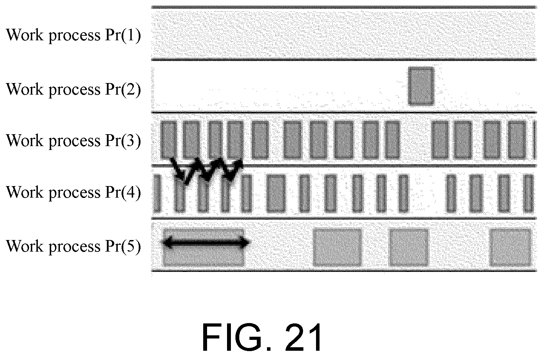

Fig. 21 is a conceptual diagram illustrating a work flow in batch work. As shown in Fig. 21, a work process group including the work processes Pr(1) to (5) will be described.

The worker A performs the work process Pr(2) once every multiple cycles. For example, replenishment of parts or the like corresponds to this work process Pr(2). Thereafter, the worker A performs the work process Pr(3), then performs the work process Pr(4), and performs the work process Pr(3) and the work process Pr(4) again. That is, the worker A alternately performs the work process Pr(3) and the work process Pr(4). For example, the work process Pr(3) corresponds to the assembly of parts, and the work process Pr(4) corresponds to a process of disposing the assembled parts on the tray. In addition, the worker B performs the work process Pr(5) asynchronously with the worker A. For example, it corresponds to moving the parts disposed on the tray to another work process or inspecting them collectively.

In a case where the batch work as described above is performed, it is assumed that the number of processes will be plural and the maximum work ratio will be a relatively low value. Thus, by including the number of processes and the maximum work ratio in the feature amount, the batch work can be classified into classes that can be distinguished.

### [Realization example based on software]

The functions of the information processing device 10 (hereinafter referred to as the "device") can be realized by a program for causing a computer to function as the device, the program causing the computer to function as each control block of the device (particularly, each part included in the history acquisition part 100, the operation determination part 130, the extraction part 150, the communication part 160, the image analysis part 170, the classification processing part 171, the class determination part 172, the input part 180, and the determination information recording control part 190).

In this case, the above device includes a computer having at least one control device (for example, a processor) and at least one storage device (for example, a memory) as hardware for executing the above program. Each function described in each of the above embodiments is realized by executing the above program using the control device and the storage device.

The above program may be recorded on one or a plurality of non-temporary and computer-readable recording media. This recording medium may or may not be included in the above device. In the latter case, the above program may be supplied to the above device through any wired or wireless transmission medium.

In addition, some or all of the function of each of the above control blocks can also be realized by a logic circuit. For example, an integrated circuit in which a logic circuit functioning as each of the above control blocks is formed is also included in the scope of the present invention. In addition, it is also possible to realize the functions of each of the above control blocks using, for example, a quantum computer.

### [Conclusion]

In order to solve the above problems, according to an aspect of the present invention, there is provided a work management device including: a history acquisition part that acquires work history information which is a history of implementation result information of implementation performed by a worker on a work process group including a plurality of work processes; a classification processing part that classifies at least some of the implementation result information of the work process group included in the work history information acquired by the history acquisition part respectively into any of a plurality of classes; and a class determination part that determines that a plurality of the classes among the classes classified by the classification processing part are standard classes in which no issues occur during work and determines that another plurality of the classes are non-standard classes in which issues are likely to occur during work.

According to the above configuration, the implementation result information of each work process group is classified into classes, and a plurality of standard classes in which it is determined that no issues have occurred during work are provided. In the past, only one such standard class has been provided, and it has sometimes been determined that issues have occurred even in implementation result information in which no issues have occurred actually. On the other hand, according to the above configuration, since a plurality of classes to be determined that no issues have occurred can be flexibly set it is possible to make a determination which is more suitable for the actual situation.

In the work management device according to an aspect of the present invention, the history acquisition part calculates a feature amount as the implementation result information on the basis of flow moving image data obtained by capturing an image of the worker's flow.

According to the above configuration, the implementation result information is acquired as a feature amount calculated on the basis of the flow moving image data. Thus, the implementation result information including a plurality of work processes can be acquired without imposing a burden on a worker.

In the work management device according to an aspect of the present invention, the classification processing part classifies the classes into a plurality of large-classification class groups on the basis of a predetermined reference, and the class determination part determines each of the classes for each of the large-classification class groups.

According to the above configuration, for each class classified into the large-classification class group, it is determined whether the class is a standard class or a non-standard class. Thus, it becomes possible to perform more appropriate class determination in accordance with the large-classification class group.

In the work management device according to an aspect of the present invention, the classification processing part provides, as the large-classification class groups, a normal work order class group in which an implementation order of the work processes included in the work process group is normal and an abnormal work order class group in which the implementation order is different from the normal implementation order.

According to the above configuration, after being classified into the normal work order class group and the abnormal work order class group, it is determined whether the class is a standard class or a non-standard class. That is, since the abnormal work order class group is a class group in which issues are likely to occur during work, it is possible to make a determination accordingly, and to improve the accuracy of the determination.

In the work management device according to an aspect of the present invention, the class determination part presents the implementation result information to a user for each of the classes and receives a user input indicating a determination result of whether each of the classes is the standard class or the non-standard class.

According to the above configuration, the user need only confirm the implementation result information for each class classified by the classification processing part and determine whether it is a standard class. Thus, it is no longer necessary to confirm a huge amount of implementation result information which has been necessary in the past, and it is possible to efficiently specify work in which issues are likely to occur during the work.

In the work management device according to an aspect of the present invention, the class determination part receives a user input indicating a determination result that the class is an abnormal class in which an abnormality has occurred from among the classes classified as the non-standard classes.

According to the above configuration, the classes classified as the standard classes and the non-standard classes can be further classified as abnormal classes. Thus, it is possible to specify the implementation result information in which an abnormality has occurred.

In the work management device according to an aspect of the present invention, the class determination part performs control for displaying work moving image data captured in a work process corresponding to the implementation result information included in each of the classes classified by the classification processing part in accordance with the user's instruction.

According to the above configuration, since the user can confirm the work moving image data and determine whether it is a standard class, it is possible to perform the determination work accurately and efficiently.

The work management device according to an aspect of the present invention further includes a determination information recording control part that performs control for recording the determination result for each of the classes determined on the basis of the user input by the class determination part as class determination information.

According to the above configuration, since the determination result for each class of the user can be recorded as the class determination information, it is possible to automatically perform class determination using the class determination information.

In the work management device according to an aspect of the present invention, the determination information recording control part performs control for setting a class including the work history information specified by the user in the work history information that has not been classified as the class by the classification processing part, and recording the class as an abnormal class in which an abnormality has occurred in the class determination information.

According to the above configuration, for example, in the case of a situation where the user can specify the work history information in which an abnormality has occurred, the class including the work history information can be recorded in the class determination information as an abnormal class. Thus, even work history information that has not been classified by the classification processing part can be set as an abnormal class.

In the work management device according to an aspect of the present invention, the class determination part refers to the class determination information to determine a type of the class of the implementation result information on the basis of a result of classification performed by the classification processing part.

According to the above configuration, since the type of class can be determined on the basis of the class determination information which is the result determined in advance by the user, it is possible to automatically implement the determination without requiring the user's judgment during the determination.

In the work management device according to an aspect of the present invention, the class determination part divides the class determined as the standard class into a plurality of standard classes on the basis of a distance from a center of the class.

According to the above configuration, by further dividing the standard work into subdivided standard work on the basis of the distance from the center, it is possible to divide the class into appropriate standard work and standard work in which there is room for improvement. Thus, by analyzing the standard work in which there is room for improvement, it is possible to take measures such as a further improvement in efficiency.

The work management device according to an aspect of the present invention further includes a work group division part that divides the work process group into a plurality of work groups, and the classification processing part classifies the implementation result information corresponding to at least one of the work groups into any of a plurality of the classes.

According to the above configuration, class determination is performed on the basis of a feature amount in which the work characteristics specific to the work group are reflected. Therefore, it is possible to perform class determination exposing issues that could not be recognized in a case where class determination is performed in consideration of all the work process groups.

The work management device according to an aspect of the present invention further includes a display control part that performs control for acquiring the class determination information from the determination information recording control part and displaying a histogram indicating a frequency of occurrence with respect to work time in a state where types of the class determination information are distinguished from each other.

According to the above configuration, by confirming the histogram, the user can recognize the distribution state of the types of class determination information according to the work time. Thus, the user can ascertain the situation such as, for example, which type of class is more common in a case where the work time is long.

In the work management device according to an aspect of the present invention, the classification processing part classifies, for each of the work processes of the work process group, feature amounts as the implementation result information, the feature amounts including a total work time in the work process, a maximum work ratio which is a ratio of a maximum work time in the work process to the total work time, and the number of processes which is the number of times the work process is performed.

According to the above configuration, the work flow can be modeled simply by using the number of processes, the total work time, and the maximum work ratio as feature amounts. In addition, since the number of processes and the maximum work ratio are included in the feature amount, batch processing (the details of which will be described later) can also be detected.

In order to solve the above problems, according to an aspect of the present invention, there is provided a work management method including: a history acquisition step of acquiring work history information which is a history of implementation result information of implementation performed by a worker on a work process group including a plurality of work processes: a classification processing step of classifying at least some of the implementation result information of the work process group included in the work history information acquired in the history acquisition step respectively into any of a plurality of classes; and a class determination step of determining that a plurality of the classes among the classes classified in the classification processing step are standard classes in which no issues occur during work and determining that another plurality of the classes are non-standard classes in which issues are likely to occur during work.

The work management device according to each aspect of the present invention may be realized by a computer, and in this case, a history acquisition program, a classification processing program, a class determination program, a determination information recording control program, and a computer-readable recording medium having the same recorded therein of the work management device for causing the computer to realize the work management device by operating the computer as each part (software element) included in the work management device also fall within the scope of the present invention.

### [Supplement]

The present invention is not limited to each of the embodiments described above, and can be changed variously in the scope shown in the claims, and embodiments obtained by appropriately combining technical means disclosed in each of the different embodiments are also included in the technical scope of the present invention.

### Reference Signs List

1 Control system
10 Information processing device (work management device)
20 PLC
30 Ceiling camera
40 Instrument
50 Control network
60 Event management device
70 External device
100 History acquisition part
110 First acquisition part
120 Second acquisition part
130 Operation determination part
140 Storage part
141 Error reference
142 Class determination information
150 Extraction part
160 Communication part
170 Image analysis part
180 Input part
190 Determination information recording control part
Aa Analysis target area
Ac Action
Ar Monitoring area
Da Operation period
Dat Work process period
Id Imaging data
La Operation result
Op Work
Pe Worker
Pr Work process
Sa Operation reference
Tme Operation completion time
Tms Operation start time
Toe Stay end point in time
Tos Stay start point in time

## Claims

1. A work management device comprising:
a history acquisition part that acquires work history information which is a history of implementation result information of implementation performed by a worker on a work process group including a plurality of work processes;
a classification processing part that classifies at least some of the implementation result information of the work process group included in the work history information acquired by the history acquisition part respectively into any of a plurality of classes; and
a class determination part that determines that a plurality of the classes among the classes classified by the classification processing part are standard classes in which no issues occur during work and determines that another plurality of the classes are non-standard classes in which issues are likely to occur during work.

2. The work management device according to claim 1, wherein the history acquisition part calculates a feature amount as the implementation result information on the basis of flow moving image data obtained by capturing an image of the worker's flow.

3. The work management device according to claim 1 or 2, wherein the classification processing part classifies the classes into a plurality of large-classification class groups on the basis of a predetermined reference, and
the class determination part determines each of the classes for each of the large-classification class groups.

4. The work management device according to claim 3, wherein the classification processing part provides, as the large-classification class groups, a normal work order class group in which an implementation order of the work processes included in the work process group is normal and an abnormal work order class group in which the implementation order is different from the normal implementation order.

5. The work management device according to any one of claims 1 to 4, wherein the class determination part presents the implementation result information to a user for each of the classes and receives a user input indicating a determination result of whether each of the classes is the standard class or the non-standard class.

6. The work management device according to any one of claims 1 to 4, wherein the class determination part receives a user input indicating a determination result that the class is an abnormal class in which an abnormality has occurred from among the classes classified as the non-standard classes.

7. The work management device according to claim 5 or 6, wherein the class determination part performs control for displaying work moving image data captured in a work process corresponding to the implementation result information included in each of the classes classified by the classification processing part in accordance with the user's instruction.

8. The work management device according to any one of claims 5 to 7, further comprising a determination information recording control part that performs control for recording the determination result for each of the classes determined on the basis of the user input by the class determination part as class determination information.

9. The work management device according to claim 8, wherein the determination information recording control part performs control for setting a class including the work history information specified by the user in the work history information that has not been classified as the class by the classification processing part, and recording the class as an abnormal class in which an abnormality has occurred in the class determination information.

10. The work management device according to claim 8 or 9, wherein the class determination part refers to the class determination information to determine a type of the class of the implementation result information on the basis of a result of classification performed by the classification processing part.

11. The work management device according to any one of claims 1 to 10, wherein the class determination part divides the class determined as the standard class into a plurality of standard classes on the basis of a distance from a center of the class.

12. The work management device according to any one of claims 1 to 11, further comprising a work group division part that divides the work process group into a plurality of work groups,
wherein the classification processing part classifies the implementation result information corresponding to at least one of the work groups into any of a plurality of the classes.

13. The work management device according to any one of claims 8 to 12. further comprising a display control part that performs control for acquiring the class determination information from the determination information recording control part and displaying a histogram indicating a frequency of occurrence with respect to work time in a state where types of the class determination information are distinguished from each other.

14. The work management device according to any one of claims 1 to 13, wherein the classification processing part classifies, for each of the work processes of the work process group, feature amounts as the implementation result information, the feature amounts including a total work time in the work process, a maximum work ratio which is a ratio of a maximum work time in the work process to the total work time, and the number of processes which is the number of times the work process is performed.

15. A work management method comprising:
a history acquisition step of acquiring work history information which is a history of implementation result information of implementation performed by a worker on a work process group including a plurality of work processes;
a classification processing step of classifying at least some of the implementation result information of the work process group included in the work history information acquired in the history acquisition step respectively into any of a plurality of classes; and
a class determination step of determining that a plurality of the classes among the classes classified in the classification processing step are standard classes in which no issues occur during work and determining that another plurality of the classes are non-standard classes in which issues are likely to occur during work.

16. A work management program for causing a computer to function as the work management device according to any one of claims 1 to 14, the work management program causing the computer to function as each part.
